(19) Europäisches Patentamt
European Patent Office
Office européen des brevets

(11) Numéro de publication: **0 249 524 B1**

# (12) FASCICULE DE BREVET EUROPEEN

(45) Date de publication de fascicule du brevet: **29.01.92**

(51) Int. Cl.[5]: **C09C 1/30**

(21) Numéro de dépôt: **87401207.3**

(22) Date de dépôt: **29.05.87**

## (54) Granulés à base de silice, procédé de préparation et leur application comme charge renforçante dans les élastomères.

(30) Priorité: **06.06.86 FR 8608160**
**17.04.87 FR 8705502**

(43) Date de publication de la demande:
**16.12.87 Bulletin 87/51**

(45) Mention de la délivrance du brevet:
**29.01.92 Bulletin 92/05**

(84) Etats contractants désignés:
**BE DE ES FR GB IT LU NL**

(56) Documents cités:
**EP-A- 0 018 866**
**FR-A- 2 353 486**
**US-A- 3 646 183**
**US-A- 4 173 491**

(73) Titulaire: **RHONE-POULENC CHIMIE**
**25, quai Paul Doumer**
**F-92408 Courbevoie Cédex(FR)**

(72) Inventeur: **Deleuil, Michel**
**41, rue Vendôme**
**F-69006 Lyon(FR)**
Inventeur: **Parmentier, François**
**12, rue Pierre Robin**
**F-69007 Lyon(FR)**

(74) Mandataire: **Dubruc, Philippe et al**
**RHONE-POULENC INTERSERVICES Service**
**Brevets Chimie 25, quai Paul-Doumer**
**F-92408 Courbevoie Cédex(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 249 524 B1

## Description

La présente invention a pour objet des granulés à base de silice, leurs procédés de préparation et une de leur application comme charge renforçante dans les élastomères.

On sait que l'on utilise depuis longtemps déjà la silice précipitée comme charge blanche renforçante dans les élastomères.

Cependant, comme toute charge renforçante elle doit pouvoir se manipuler et s'incorporer facilement dans le mélange.

La présentation sous forme pulvérulente n'est pas satisfaisante dans la mesure où elle entraîne un poussièrage important et une incorporation lente (densité apparente faible).

On a proposé dans le passé une présentation sous forme granulée qui permet de résoudre convenablement les deux problèmes précédents.

Ainsi, dans le brevet US 3 646 183, on décrit des granulés à base de silice obtenus par granulation de poudres dans des tambours tournants, d'abord en milieu aqueux puis en milieu solide, et en présence d'un agent tensio-actif exerçant une fonction de liant. Toutefois, en raison du procédé de synthèse utilisé, de tels granulés présentent d'une part une densité insuffisante et d'autre part une gamme de granulométrie assez limitée.

Bien qu'une présentation sous forme de granulés permette donc de diminuer le poussiérage et d'augmenter la vitesse d'incorporation, elle entraine néanmoins souvent une dispersion insuffisante de la charge dans les élastomères.

Pour obvier à cet inconvénient, diverses solutions ont déjà été proposées.

Dans le brevet européen n° 18866 au nom de la Demanderesse on décrit ainsi des granulés de silice sous forme de billes homogènes de taille moyenne supérieure à 80 µm comprise notamment entre 200 et 300 µm.

Les billes sont obtenues par atomisation d'une suspension de silice précipitée.

Ce type de produit s'est montré particulièrement intéressant pour ses propriétés dans le renforcement des élastomères.

Toutefois le besoin s'est fait sentir d'améliorer encore les produits obtenus sur un ou éventuellement plusieurs aspects à la fois. C'est ainsi que le problème s'est posé d'avoir des produits de granulometrie éventuellement plus élevée et plus homogène, plus denses, à teneur en fines encore plus faible et moins fragiles.

Par ailleurs, les procédés de préparation des granulés et notamment ceux décrits ci-dessus mettent en oeuvre des atomiseurs.

Ces appareils imposent des conditions sur les suspensions à atomiser et notamment sur leur teneur en matière sèche qui ne peut dépasser une certaine valeur maximale. Ils nécessitent aussi un entretien important.

Ces procédés présentent aussi l'inconvénient de limiter à une certaine gamme de granulometrie les produits obtenus, ceci notamment à cause de la faible valeur de la teneur en matière sèche mentionnée ci-dessus.

Un autre problème s'est donc aussi posé à savoir la simplification des procédés de préparation et l'augmentation de leurs possibilités.

Un premier objet de l'invention est donc la mise au point de produits présentant des caractéristiques encore améliorées.

Un second objet de l'invention est aussi la simplification et l'amélioration des procédés pour l'obtention de ces produits.

Dans ce but et selon une première variante, le granulé à base de silice selon l'invention est caractérisé en ce qu'il se présente sous forme de bille sensiblement sphérique, de taille moyenne comprise entre 80 µm et 400 µm et ayant une densité comprise entre 0,32 et 0,5.

Selon une deuxième variante, le granulé à base de silice selon l'invention est un granulé caractérisé en ce qu'il se présente sous forme de bille sensiblement sphérique, de taille moyenne comprise entre 0,4 mm et 20 mm et ayant une densité comprise entre 0,32 et 0,5.

Par ailleurs, l'invention concerne aussi un procédé pour la préparation de granulés de silice.

Ce procédé de préparation selon l'invention est caractérisé en ce qu'il comporte les étapes suivantes :

- on met en présence et on mélange sous agitation une suspension aqueuse de silice, au moins un hydrophobant de type cationique ou amphotère et au moins un solvant organique peu ou non miscible à l'eau ce par quoi on obtient une phase aqueuse substantiellement exempte de silice et des granulés à base de silice ;
- on sépare la phase aqueuse des granulés,

- éventuellement, on lave et on sèche lesdits granulés.

L'invention concerne enfin un procédé pour la préparation de granulés à base de silice selon la première et la deuxième variante ci-dessus.

Ce deuxième procédé de préparation selon l'invention est caractérisé en ce qu'il comporte les étapes suivantes :

- on met en présence et on mélange sous agitation une suspension aqueuse de silice, au moins un hydrophobant de type cationique ou amphotère et au moins un solvant organique peu ou non miscible à l'eau ce par quoi on obtient une phase aqueuse substantiellement exempte de silice et des granulés à base de silice ;
- on sépare la phase aqueuse des granulés ;
- on soumet les granulés à un traitement de densification.

Ces procédés sont fiables et souples. Ils nécessitent en effet un appareillage simple et peu coûteux. Ils permettent d'obtenir pour les produits tout une gamme de tailles et de densités.

Enfin, d'une manière générale, l'invention concerne certains des granulés à base de silice obtenus par les deux procédés de préparation décrits ci-dessus.

D'autres caractéristiques et avantages de l'invention seront mieux compris à la lecture de la description et des exemples concrets mais non limitatifs qui vont suivre.

Comme cela a été vu plus haut, les produits de l'invention sont de deux types qui vont être décrits plus particulièrement ci-dessous.

Dans les deux cas il s'agit de granulés à base de silice. Selon la présente invention les termes "à base de silice" doivent être pris au sens large, on entend en effet par là les granulés composés essentiellement d'éléments ou d'un mélange d'éléments provenant du groupe comprenant les acides siliciques, la silice, les silicates et silico-aluminates.

Les granulés de l'invention sont généralement à base de silice précipitée.

Ils se présentent sous forme de bille sensiblement sphérique et leur taille moyenne est comprise entre 80 µm et 400 µm selon la première variante, et comprise entre 0,4 mm et 20 mm selon une seconde variante.

Selon un mode de réalisation préférentielle de la seconde variante leur taille moyenne est comprise entre 0,5 mm et 20 mm.

Leur densité est comprise entre 0,32 et 0,5. Il s'agit là de la densité de remplissage à l'état tassé selon la norme AFNOR n°030100.

La surface BET de la silice dont ils sont constitués est généralement d'au moins 50 $m^2/g$, plus précisement elle peut être comprise entre 50 et 350 et plus particulièrement entre 100 et 300 $m^2/g$. La surface CTAB est généralement d'au moins 40 $m^2/g$. Elle peut être plus particulièrement comprise entre 40 et 320 $m^2/g$ et notamment 80 et 270 $m^2/g$.

Cette surface BET est déterminée selon la méthode de BRUNAUER-AMMET-TELLER décrite dans the journal of the American Chemical Society Vol 60 p 309 February 1938.

La surface CTAB est la surface externe déterminée par absorption de bromure de céthyl triméthyl ammonium à pH 9 selon la méthode exposée par JAY, JANSEN et G. KRAUS dans Rubber Chemistry and Technology 44 (1971) - p 1287-1296.

Enfin, ces granulés présentent des caractéristiques spécifiques de porosité.

On précise ici et pour tout le reste de la description que les volumes poreux sont mesurés par porosimétrie au mercure, les diamètres de pores étant calculés par la relation de WASHBURN avec un angle de contact theta = 130° et une tension superficielle gamma = 484 Dynes/cm.

Les mesures de porosité sont faites sur des produits séchés à 150° C sous une pression de 1pa. Les porosités données reflètent les porosités intra-granulés et concernent donc les pores de diamètres compris entre 10µ et 0,001µ.

Leur volume poreux total est au plus de 1,40 $cm^3/g$ et il est plus particulièrement compris entre 1,40 et 0,7 $cm^3/g$ ceci pour les produits de densité 0,32 à 0,5 respectivement. Cette dernière corrélation s'entend pour des produits de tailles substantiellement monodisperses.

Par ailleurs, en ce qui concerne la répartition des volumes poreux, ces granulés répondent sensiblement aux conditions suivantes : au moins 80% environ du volume poreux total est constitué par des pores présentant un diamètre au plus sensiblement égal à la valeur donnée ci-dessous en fonction de la surface spécifique BET :

| | | |
|---|---|---|
| 50-100 $m^2/g$ | : | 0,12 µm |
| 100-150 $m^2/g$ | : | 0,075 µm |
| 150-200 $m^2/g$ | : | 0,050 µm |
| 200-250 $m^2/g$ | : | 0,025 µm |
| > 250 $m^2/g$ | : | 0,015 µm. |

Il y a lieu de noter que l'invention permet l'obtention de granulés hydrophobes. Outre qu'ils peuvent présenter les caractéristiques décrites ci-dessus pour chaque type de granulés, ils peuvent contenir environ entre 0,5 et 35 % et plus précisement entre 1 et 10 %, en poids d'hydrophobant suivant la surface BET de la silice.

Le caractère hydrophobe des granulés de l'invention se maintient au cours du temps.

Les granulés de l'invention présentent de nombreux avantages.Ils ont tout d'abord une bonne résistance à l'attrition. Ils produisent donc moins de fines lors de leurs transports ou de leurs manipulations, notamment dans leur incorporation au caoutchouc. Ils ont une densité élevée. Ils présentent une bonne dispersibilité dans le caoutchouc. Leur présentation peut varier dans une gamme granulometrique large ce qui les rend aptes à différentes applications.

A ce sujet, outre l'application élastomère, ils peuvent être utilisés dans toutes les applications connues de la silice par exemple en tant que charges, agents adsorbants, agents antimottants, etc.

Des précédés de préparation de granulés de silice conformes à l'invention ou non, vont maintenant être décrits.

Ces précédés comprennent un certain nombre d'étapes communes qui vont être étudiées ci-dessous.

La première étape consiste à mettre en présence et à mélanger une suspension de silice, au moins un hydrophobant et au moins un solvant organique peu ou non miscible à l'eau.

La Demanderesse a découvert qu'en opérant dans ces conditions on pouvait obtenir une granulation de la silice. Ces différentes conditions vont maintenant être étudiés en détail.

Suspension de Silice

La suspension de silice peut être obtenue d'une manière quelconque.

Généralement elle est obtenue par précipitation d'une solution d'un silicate alcalin neutralisée par un agent acidifiant tel que l'acide sulfurique ou le gaz carbonique .

Il est à noter que pour les procédés de l'invention la teneur en matière sèche de la suspension n'est pas critique.

Hydrophobant

La première étape des procédés met aussi en oeuvre un hydrophobant.

Selon une caractéristique importante de l'invention cet hydrophobant doit être un hydrophobant cationique ou amphotère.

Les hydrophobants convenant aux procédés, de l'invention pourront être choisis notamment dans le groupe comprenant les amines primaires, secondaires, tertiaires ou leurs sels, les sels d'ammonium quaternaire, les amino-acides, ou leurs sels.

En ce qui concerne les amines on peut tout d'abord utiliser les amines légères. On entend par là les amines dont le nombre d'atomes de carbone de leur chaîne hydrocarbonée est au plus égal à 6. On emploie plus particulièrement les amines en $C_4$-$C_6$.

On utilise de préférence les amines aliphatiques.

A titre d'exemple, on peut citer la n-butylamine, la cyclohexylamine.

On peut aussi utiliser les amines grasses. Pour fixer les idées, on peut entendre par là les amines dont les substituants sont des chaînes carbonées présentant un nombre d'atomes de carbone supérieur à 6, et plus particulièrement supérieur ou égal à 10.

Dans le cadre des amines tertiaires, on peut citer les dimethylalkyl amines grasses de formule $RN(CH_3)_2$ R étant notamment un radical en $C_8$-$C_{22}$ en particulier $C_8$-$C_{18}$, et par exemple un radical correspondant à la chaine carbonée des acides gras de suif, de coprah, d'acide oleique, hydrogenés ou non.

Dans ce même groupe on peut aussi citer les dialkylmethyl amines grasses de formule $R_2NCH_3$ le

radical R étant défini comme dans le paragraphe précédent.

Toujours dans le même groupe conviennent aussi les trialkyl amines grasses de formule $R_3N$, R étant défini comme précédemment.

Comme sels d'amines primaires, secondaires ou tertiaires on peut utiliser les acétates.

Par ailleurs, on pourra utiliser les sels d'ammonium quaternaire de formule (1)

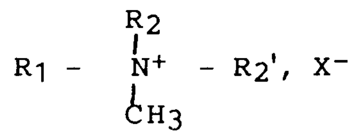

$R_1$ étant un radical alkyle ou alcényle avec de préférence un nombre d'atomes de carbone égal ou supérieur à 6 et plus particulièrement égal ou supérieur à 10, $R_2$ et $R_2'$ étant des radicaux alkyle, alkyle-oxy ou alkyl-phenyle identiques ou différents, X étant un anion.

Parmi ces sels on utilise principalement les chlorures et les sulfates.

On peut citer comme hydrophobants de cette catégorie qui conviennent bien celui dans lequel $R_1$ est le radical coprah, $R_2$ est le radical benzyle, $R_3$ le radical methyl, l'anion étant le chlore, produit commercialisé sous la marque NORAMIUM DA 50, et celui dans lequel $R_1$ est le radical correspondant à la chaine carbonée de l'acide gras de suif, $R_2$ et $R'_2$ sont identiques et représentent le methyl, produit commercialisé sous la marque NORAMIUM MS80.

Il est aussi possible d'utiliser des diamines sans sortir du cadre de l'invention.

On peut mentionner les diamines de formule $RNH-(CH_2)3-NH_2$ dans laquelle R est tel que défini précedemment.

Il est aussi possible d'utiliser des diammoniums quaternaires de formule (2) :

$R_3\ R_4\ R_5\ N^+ - (CH_2)\ n - N^+R_6R_7R_8,\ 2X^-$

$R_3$ étant un radical alkyle ou alcenyle avec un nombre d'atomes de carbone égal ou supérieur à 8 ;

$R_4$ $R_5$ $R_6$ $R_7$ et $R_8$ étant l'hydrogène ou des radicaux alkyles,

$R_4$ $R_5$ $R_6$ ou $R_7$ pouvant être identiques ou différents ; n étant un nombre compris entre 1 et 3,

X étant un anion.

Un exemple de ce type de produit est celui dans lequel n = 3, $R_4 = R_5 = R_6 = R_7 = R_8 = CH_3$, X est le chlore, produit commercialisé sous la marque DUOQUAD.

On peut aussi citer les sels de diamines de formule (3) :

$$[R_3\ R_4\ R_5\ N-(CH_2)_n-\ NR_6R_7R_9]^{2+}\ (R_{10}COO)_2^{2-}$$

$R_3$, $R_4$, $R_5$, $R_6$, $R_7$ et n étant tels que précédemment définis, $R_9$ étant l'hydrogène ou un radical alkyle, $R_{10}$ étant un radical alkyle, avec un nombre d'atomes de carbone égal ou supérieur à 8.

On peut citer comme exemple les dioleates de diamine.

On peut aussi utiliser avantageusement les amino-acides de formule (4) ou (5)

(4) 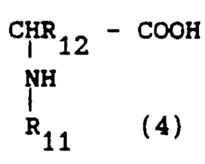 (4) ou 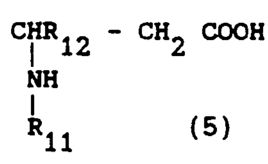 (5)

$R_{11}$, $R_{12}$ étant l'hydrogène ou un radical alkyl, avec comme conditions que $R_{11}$ et $R_{12}$ ne soient pas simultanément l'hydrogène.

On peut citer notamment dans ce cas la lauryl bétaïne ($R_{11} = C_{12}, R_{12} = H$) vendue sous la marque ARMOTERIC LB.

Comme autres composés intéressants pour la mise en oeuvre du procédé de l'invention on peut mentionner ceux de formule (6)

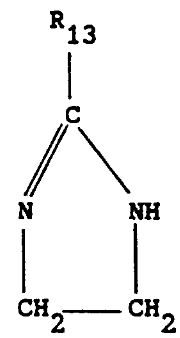

dans laquelle $R_{13}$ est un radical alkyle en $C_8$-$C_{22}$ en particulier $C_8$-$C_{18}$ et par exemple correspondant à la chaine carbonée des acides gras de suif, de coprah, de l'acide oleique, hydrogenés ou non, ou des sels des dérivés de formule (7)

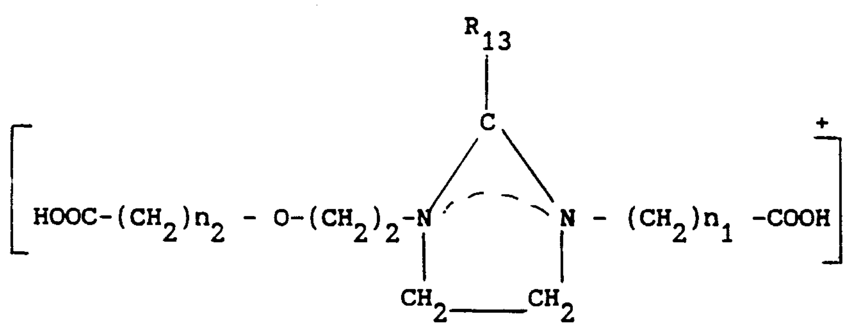

dans laquelle $n_1$ et $n_2$ sont des nombres entiers identiques ou différents pouvant varier entre 1 et 4.

On pourra citer plus particulièrement les produits commercialisés sous les marques suivantes.

<u>SOCHAMINE A 7525</u>

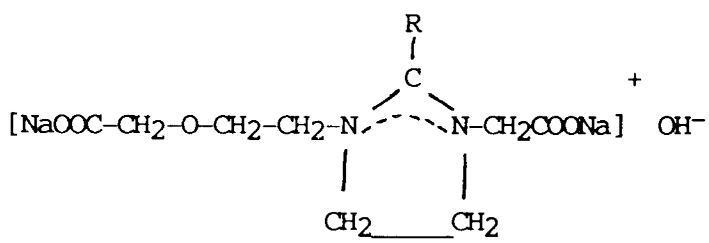

<u>SOCHAMINE A 7527</u>

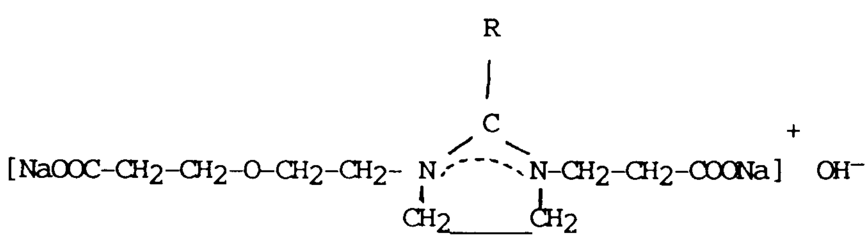

<u>SOCHAMINE AC 721</u>

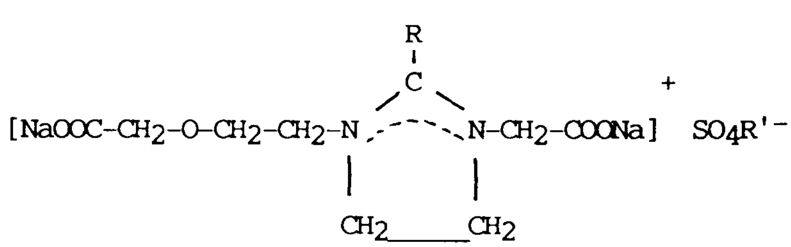

R' = chaîne alkyle en C12-C14.

R désignant le radical coprah

On peut enfin citer des dérivés pyridinium de formule (8).

$R_{14}$- $C_5H_4$ $NR_{15}{}^{+}$ $X^-$, X étant un halogène, notamment le chlore, $R_{14}$ étant un radical correspondant à la chaine carbonée d'un acide gras, notamment un radical en $C_{16}$,

$R_{15}$ étant un alkyl, plus particulièrement $CH_3$.

Solvant

Enfin toujours dans la première étape du procédé on utilise un solvant organique peu ou pas miscible à l'eau.Il va de soi que le solvant doit être compatible avec l'hydrophobant utilisé.

Ce solvant pourra être choisi dans le groupe comprenant les esters, les éthers et les cétones et de préférence les dérivés aliphatiques de ceux-ci.

En ce qui concerne les esters aliphatiques on peut utiliser en particulier les formiates, les acétates, les propionates, les butyrates, les oxalates, les pbosphates et lactates.

On préfère les acétates, notamment les acétates d'éthyle, d'isopropyle et de butyle.

Parmi les éthers on citera notamment l'éther diisopropylique.

Les cétones aliphatiques peuvent être avantageusement choisies pour la mise en oeuvre du procédé de l'invention. On pourra citer tout particulièrement la méthyl-isobutyl cétone, l'éthyl-isopropyl cétone.

Comme autre type de solvants utilisables figurent les solvants aromatiques ou hydrocarbures benzéniques.

On peut utiliser tout particulièrement le xylène et le toluène. Les dérivés halogénes et notamment chlorés de ces solvants peuvent aussi être employés par exemple le chlorobenzene.

Par ailleurs, un autre type de solvants utilisables est celui des carbures aliphatiques halogènés ou hydrocarbures alicycliques halogènés.

On peut citer les carbures aliphatiques ou alicycliques halogènés à chaines courtes en $C_1$ - $C_4$. Ils correspondent aux produits vendus sous la marque FLUGENE.

On peut citer notamment le trichlorotrifluoroéthane le dichlorotétrafluoroéthane.

On peut mentionner comme solvants envisageables les carbures éthyléniques halogènés.

On pourra citer plus particulièrement dans ce cas le dichloréthylène, trichloréthylène et le tétrachloréthylène.

Tous les solvants décrits ci-dessus peuvent bien entendu être utilisés seuls ou en combinaison.

La quantité d'hydrophobant à utiliser varie en fonction du type de silice présente dans la suspension de départ et notamment en fonction de sa surface (surface BET). Cette quantité est d'autant plus grande que cette surface est importante. Généralement elle est comprise entre 1 % et 60 % en poids par rapport à la silice exprimée en matière sèche, c'est-à-dire par rapport à la quantité de $SiO_2$ dans la suspension.

Plus précisément la quantité d'hydrophobant définie plus haut peut être avantageusement comprise enter 1 et 20% dans le cas où l'hydrophobant est beaucoup plus soluble dans l'eau que dans le solvant. C'est le cas des sels d'amine. Dans le cas où l'hydrophobant est beaucoup plus soluble dans la phase organique que dans l'eau cette quantité variera de préférence entre 5 et 60%.

Toutefois, les amines légères constituent un cas particulier.

En effet, pour celles-ci, ou utilisera de préférence une quantité d'hydrophobant d'au moins 60 % (toujours mesurée en poids par rapport à la silice exprimée en matière sèche) plus particulièrement d'au moins 70 % pour les amines en $C_5$-$C_6$ et d'au moins 100 % peur celles en $C_4$ ou moins.

La quantité maximale d'hydrophobant n'est pas en soi critique.

On peut dire à titre d'exemple qu'en pratique elle est d'au plus 200 %.

La quantité de solvant est aussi fonction du type de silice de la même manière que décrite plus haut pour l'hydrophobant. Cette quantité est généralement telle que le rapport volume de solvant exprimé en litre/poids de silice en kg (toujours calculé par rapport à $SiO_2$ présent dans la suspension) varie entre 1 et 5, de préférence 1,5 et 4,5.

En fait les quantités de solvant et d'hydrophobant sont liées et dépendent aussi de la nature de l'hydrophobant. Pour une quantité d'hydrophobant fixée, il existe une quantité minimale de solvant en deçà de laquelle il n'y a pas agglomération de la silice. Il existe aussi une quantité maximale au delà de laquelle il y a collage des granulés formés et obtention d'une masse compacte de silice.

Généralement, ces quantités minimales et maximales sont situées dans les fourchettes de valeur indiquées plus haut.

Généralement, ces quantités augmentent avec la quantité d'hydrophobant utilisée pour arriver à un palier à partir d une certaine quantité de cet hydrophobant.

La mise en présence de la suspension de silice, de l'hydrophobant et du solvant peut se faire de plusieurs manières.

Selon une première manière on mélange dans un premier temps la suspension de silice avec le solvant et on introduit dans un deuxième temps l'hydrophobant dans le mélange ainsi obtenu.

Selon une seconde manière, on mélange dans un premier temps la suspension de silice et l'hydrophobant et, dans un deuxième temps, on ajoute le solvant au mélange ainsi obtenu.

Selon une troisième manière préférentielle dans le cas d'hydrophobants peu solubles dans l'eau, par exemple les amines grasses, ou peut mélanger préalablement le solvant et l'hydrophobant et mettre en présence ce mélange avec la suspension de silice.

La mise en présence de la suspension de silice, de l'hydrophobant et du solvant se fait sous agitation. On pourra utiliser tout type d'agitation, en particulier un agiteur du type à turbine.

La granulométrie des produits obtenus varie en fonction de la puissance de l'agitation. La granulométrie est d'autant plus fine que la puissance d'agitation est élevée.

La température à laquelle se fait le mélange n'est pas critique. Elle pourra varier généralement entre la température ambiante et 80 °C. Cette température sera souvent celle à laquelle la suspension de silice a été obtenue.

Toutefois, en ce qui concerne la température, les amines légères constituent aussi un cas particulier. En effet, on s'est apperçu que cette température doit être de préférence d'autant plus élevée que le nombre d'atomes de carbone de l'amine utilisée est faible.

Pour les amines en $C_4$ ou moins cette température sera aussi fonction du solvant organique utilisé, généralement elle sera d'au moins 50 °C et plus particulièrement d'au moins 80 °C.

Pour les amines $C_5$-$C_6$, cette température est aussi fonction du solvant et de leur solubilité dans l'eau. Généralement, cette température est d'autant plus élevée que cette solubilité est grande. En principe, elle est d'au moins 60 °C et plus particulièrement d'au moins 80 °C.

Une fois l'agitation du milieu réactionnel terminée, on obtient des granulés de silice et une phase liquide qui est généralement une phase aqueuse.

La deuxième étape consiste à séparer les granulés et la phase liquide obtenus. Cette séparation peut se faire par tout moyen connu, par exemple filtre à bande ou centrifugeuse.

Cette séparation se fait facilement. Il s'agit là d'un des avantages du procédé de l'invention.

A la suite de cette séparation on obtient des granulés à base de silice.

Ces granulés peuvent contenir des sels comme par exemple du sulfate de sodium dans le cas des suspensions de silice obtenues par neutralisation des silicates alcalins par l'acide sulfurique.

Une troisième étape pourra être en conséquence une étape de lavage destinée à éliminer ces impuretés mentionnées ci-dessus.

Plusieurs types de lavage peuvent être utilisés.

Pour l'élimination des impuretés minérales du type $Na_2SO_4$ on effectue un lavage à l'eau saturée en solvant. Le lavage se fait ainsi très facilement par exemple directement sur le gâteau de filtration issu de la deuxième étape de séparation. On peut arriver ainsi à des teneurs en $Na_2SO_4$ inférieures à 0,1 % pour le produit sec.

Les granulés obtenus, peuvent être ensuite séchés. Ce séchage peut se faire selon toute méthode connue.

On vient donc de décrire jusqu'ici les étapes communes aux deux procédés de l'invention à savoir l'étape de mélange et d'agitation, l'étape de séparation et les étapes éventuelles de lavage et de séchage.

Le second procédé de l'invention se différencie du premier en ce sens qu'il comporte une étape supplémentaire particulière effectuée à partir des granulés obtenus à l'issu du premier procédé.

Cette étape vise essentiellement à densifier le produit.

Cette densification peut être réalisée par toute opération permettant d'appliquer une énergie mécanique suffisante au granulé pour sa mise sous une forme plus dense.

Grace aux propriétés des granulés de départ, cet effet de densification peut être très facilement obtenu. On peut ainsi faire varier la densité de remplissage à l'état tassé du produit de 0,32 à 0,5.

Par ailleurs, toujours grâce aux propriétés du produit, outre la densification, on peut obtenir conjointement une augmentation du diamètre des produits.

C'est ainsi que l'on peut faire varier le diamètre des granulés entre 0,5 et 20 mm environ, plus particulièrement entre 0,5 et 10 mm.

La densification peut être obtenue en soumettant les granulés à une agitation. Cette agitation peut être réalisée de différentes manières.

Il peut s'agir d'une agitation obtenue par roulement par exemple en faisant passer le produit dans un tambour tournant, ou sur un disque incliné (drageoir) ou dans un appareil type MARUMERIZER c'est à dire

un appareil à cuve cylindrique dont le fond seul est entrainé en rotation.

Il peut s'agir d'une agitation par action mécanique, les granulés étant introduits dans un récipient muni d'un agitateur. On peut citer comme appareil convenable les appareils du type LÖDIGE, sphère MORITZ, GUEDU.

Enfin, la densification peut notamment être obtenue par passage des granulés dans un lit fluide, du type par exemple ROTOFLUID.

Les granulés peuvent être séchés. Le séchage peut être effectué en même temps que la densification, le séchage se faisant donc sous agitation. Il peut aussi se faire en partie pendant la densification, en partie après par temple dans une étuve. Il peut enfin être réalisé dans une étape totalement distincte de la densification.

Des exemples concrets vont maintenant être donnés.

Exemple 1

Cet exemple fait état d'essais de granulation avec différents solvants.

L'essai est réalisé en réacteur de 1l, agité par une turbine Rushton à 800 tours/minute et contre pales : on introduit 735 g d'un milieu aqueux contenant 70g/l de $SiO_2$ présentant une surface spécifique BET de 125 $m^2/g$ et 50 g/l de $Na_2SO_4$ et 100 ml de solvant organique. On ajoute une solution de NORAMIUM DA50 à 10 % en matière sèche jusqu'à granulation.

Les résultats sont indiqués dans le tableau 1 ci-dessous :

TABLEAU 1

| Essais n° | SOLVANT | Pourcentage d'hydrophobant en matière seche introduit par rapport à $SiO_2$ |
|---|---|---|
| 1 | Acétate d'éthyle | 2,7 |
| 2 | Acétate d'isobutyle | 3,5 |
| 3 | Ether diisopropylique | 4,1 |
| 4 | Méthyl Isobutyl Cétone (MIBK) | 2,3 |
| 5 | Toluène | 3,4 |
| 6 | Mélange MIBK - Flugène 113, 15/85 (en volume) | 5,5 |
| 7 | Tetrachloréthylène | 3,5 |

Exemple 2

Dans un appareillage identique à l'exemple 1 et contenant 735 g du même milieu aqueux, on ajoute un mélange de 15 g de n-octylamine et de 100ml de solvant.

On termine la granulation avec 20 $cm^3$ de solvant. Les résultats sont donnés dans le tableau 2 ci-dessous pour différents solvants.

TABLEAU 2

| Essais n° | SOLVANT | Pourcentage d'hydrophobant en matière sèche introduit par rapport à $SiO_2$ |
|---|---|---|
| 8 | Trichloro 1,1,2 trifluoro 1,2,2 éthane (Flugene 113) | 30 % |
| 9 | Oxyde de dibutyle | 30 % |
| 10 | Tetrachlorure de carbone | 30 % |
| 11 | Hexane | 30 % |

Exemple 3

On procède de la même manière que dans l'exemple 1. Le solvant utilisé est la MIBK. Plusieurs hydrophobants sont essayés. Les résultats sont donnés dans le tableau 3.

TABLEAU 3

| NOM COMMERCIAL | FORMULE CHIMIQUE | Pourcentage d'hydrophobant en matière sèche utilisé par rapport à $SiO_2$ en poids |
|---|---|---|
| Sochamine 35 (sulfate) | Imidazoline R = $C_{14}$ | 2,3 |
| Sochamine 2662 | Imidazolinium R = $C_{14}$ | 4,0 |
| Sochamine A 7527 | Dicarboxylate d'imidazolinium | 5,4 |
| Duoquad T-50 | Diammonium quaternaire | 3,0 |
| Amotéric IB | Lauryl Betaïne R = $C_{12}$ | 2,2 |
| Armeen Z9 | acide N-coprah amindobutyrique | 2,8 |
| Noramium DA 50 | Chlorure de diméthyl benzyl coprah-ammonium | 2,3 |
| Noramium MS 80 | Chlorure de triméthyl suif ammonium (R = $C_{18}$) | 2,2 |
| Noram DMC (sulfate) | N,N, diméthyl coprah-ammonium sulfate | 1,8 |

Exemple 4

On charge un réacteur de 200 l avec 157,5 kg de bouillie de silice (T = 30 °C)à 70 g/l de $SiO_2$ présentant une surface BET de 125 $m^2/g$ et 50 g/l de $Na_2SO_4$

On agite à 170 t/mn par une hélice MIXEL.

Ensuite on introduit 19 kg de MIBK, soit 24 l.

On ajoute enfin dans un premier temps 4,5 kg de solution de NORAMIUM à 5 %.

On agite à 310 rpm

On ajoute dans un deuxième temps 0,8 kg de solution de NORAMIUM à 5 %.

On agite 5 mn encore et on observe une granulation.

On filtre sous vide. Le temps de filtration est de 3 mn.

Le gâteau a la composition suivante : (% en poids)

$SiO_2$ : 21 % $H_2O$ : 46 % MIBK : 33 %

On lave les granulés en deux étapes :

Tout d'abord avec 100 l d'eau saturée en MIBK, repulpage sur le filtre, puis filtration sous vide.

Ensuite avec 50 l d'eau saturée en MIBK et çontenant 400 ppm de NORAMIUM, repulpage sur le filtre, puis filtration sous vide.

On sèche en étuve à 110° C.
Le produit sec a une densité non tassée de 0,2 et une taille moyenne de 1 mm.
Il présente un VPT de 2,91 $cm^3/g$ et des surfaces CTAB de 105 $m^2/g$ et BET de 95 $m^2/g$.

Exemple 5

Dans un réacteur du même type que dans l'exemple 1, on charge 735 $cm^3$ d'une bouillie de silice à 70 g/l de silice et 50 g/l de $Na_2SO_4$, la silice présentant une surface BET de 125 $m^2/g$.

On ajoute 40 g d'une solution de NORAMIUM DA 50 à 10% en matière sèche et 150 $cm^3$ d'un mélange MIBK. FLUGENE 113 (Rapport respectif en volume 15-85). L'agitation est poursuivie 3 heures à 800 t/mn. On filtre et on sèche à l'étuve à 110° C. Le produit a une densité de 0,28 et une taille moyenne de particules de 1 mm. Le volume poreux total est de 1,68 $cm^3/g$.

Exemple 6

Cet exemple illustre la préparation de granulés selon la seconde variant de réalisation de l'invention.

On part du gâteau humide obtenu dans l'exemple 4. On effectue le séchage du produit dans une sphère MORITZ de 10 litres. On fait varier la vitesse d'agitation de la sphère et la température. Les résultats sont donnés dans le tableau 4 ci-dessous:

TABLEAU 4

| N° Essais | Poids humide (g) | T(°C) | Vitesse de rotation de l'agitateur t/mn | Temps de granulation en minutes | Densité | d moyen (mm) | Volume poreux total $cm^3/g$ |
|---|---|---|---|---|---|---|---|
| 1 | 2 100 | 70 | 550 | 20 | 0,41 | 1 | 1,00 |
| 2 | 2 100 | 80 | 550 | 15 | 0,35 | 1 | 1,25 |
| 3 | 2 100 | 90 | 550 | 8 | 0,37 | 1 | 1,16 |
| 4 | 2 100 | 80 | 440 | 17 | 0,32 | 2,5 | 1,4 |

Exemple 7

Dans un réacteur de 5 l avec agitateur à ancre on a introduit une suspension de 472 g de silice dans 3 700 g d'eau (surface BET silice 125 m2/g). On ajoute une solution d'INIPOL de formule $RNH_2$- $(CH_2)$ - $NH_3$ 2+ (R COO)$2^2$ - avec R = $C_{18}$, la quantité d'hydrophobant par rapport à $SiO_2$ étant de 6 % en poids. On agite pendant 15 minutes puis on ajoute 860 g d'acétate d'ethyle. On agite de nouveau pendant 15 minutes. On ajoute enfin dans un dernier temps 200 g d'acétate d'éthyl.

On filtre, le gâteau obtenu est ensuite séché en sphère MORITZ comme dans l'exemple 6 à une température de 80° C pendant 10 minutes avec une vitesse d'agitation de 550 t/mm. On obtient un produit de densité 0,47 et de VPT de 0,81 cm3/g.

Exemple 8

Cet exemple illustre aussi la préparation d'un granulé densifié. On part de 4 300 g d'une suspension à 13,4 % dans l'eau d'une silice de surface BET de 125 $m^2/g$.

Cette suspension est introduite dans un réacteur de 10 l. et on y ajoute sous agitation 35 g d'une

solution d'INIPOL 002 (dioleate de diamine) dans 200 g d'acétate d'éthyle en 10 minutes.

On ajoute ensuite en 35 minutes 1 075 g d'acétate d'ethyle.

Les granulés obtenus sont filtrés puis 2 000 g de produit est sèché en sphère MORITZ de 10 l à une température de 70 °C avec une vitesse de rotation de l'agitateur de 300tr/mn. Le temps de granulation est de 60 minutes.

On obtient un produit de densité 0,44, de diamètre moyen de 0,3 mm et de VPT de 0,91 $cm^3/g$.

Exemple 9

Cet exemple illustre l'utilisation d'amines légères.

On introduit 727 g d'un milieu aqueux contenant 7,7 % en poids d'une silice présentant une surface BET de 125 $m^2/g$ et 92,3 % en poids d'eau dans un réacteur de 1 l.

L'agitation est fixée à 800 tr/mn.

160 g de $C_2Cl_4$ sont ajoutés rapidement d'abord. Puis la quantité d'amine nécessaire est introduite en 5 minutes.

Le milieu est laissé sous agitation 10 minutes.

Les granulés sont filtrés, puis essorés sous vide 1 minute et sèchés sous vide en étuve à 80 °C.

Les conditions opératoires principales sont donnés ci-dessous.

| T°C | Amine | Kg amine/Kg $SiO_2$ | quantité d'amine utilisée en g |
|---|---|---|---|
| 80 | n-butylamine | 1,3 | 75,5 |
| 80 | cyclohexylamine | 0,7 | 40 |

Les granulés obtenus dans les deux cas présentent les caractéristiques suivantes :

| | |
|---|---|
| densité | : 0,26, |
| taille moyenne | : 0,8 mm, |
| surface BET | : 125 $m^2/g$, |
| volume poreux total | : 1,84 $cm^3/g$. |

Exemple 10

Cet exemple illustre la bonne résistance à l'attrition des granules selon l'inventon.

La mesure de la résistance à l'attrition est effectuée dans les conditions suivantes.

On utilise un récipient dont le fond est muni d'une buse calibrée dans laquelle passe un jet d'air. Le diamètre de la buse peut varier entre 300 et 1000 µm. La vitesse de l'air dans la buse varie entre 50 et 200 m/s.

Le récipient est rempli d'un poids P de granulés correspondant à une fraction granulométrique de 0,2 à 1 mm.

Le débit d'air est ajusté de manière à être suffisant pour mettre le lit en mouvement dans un état fluide.

Pour un poids P de granulé, un débit d'air Q et un diamètre de buse donnés après 30 minutes de passage d'air dans le dispositif, on soutire les granulés restant dans le lit, on les passe au tamis correspondant à la fracton granulométrique mentionnée plus haut et on mesure la perte en poids.

On fait différentes mesures en changeant de diamètre de buse et donc avec différentes vitesses d'air.

En traçant la courbe de la perte en poids en fonction de la vitesse de l'air, on observe que cette courbe présente un palier jusqu'à une vitesse critique $V_{cr}$ à partir de laquelle on commence à casser les grains et où la courbe présente une pente significativement croissante.

Cette vitesse correspond à l'énergie minimale nécessaire pour provoquer l'apparition de fines à partir des produits.

Pour le produit son l'exemple 6 essai n° 1 cette vitesse critique est de 80 m/s.

Pour un produit granulé son l'art antérieur (Brevet Européen 18866) cette vitesse n'est que de 65 m/s.

Exemple 11

Cet exemple a pour but d'illustrer l'application au renforcement des élastomères.

On prépare tout d'abord un granulé (1) selon l'invention et selon le mode opératoire de granulation de l'exemple 7. Toutefois, la silice présente une surface BET de 175 m2/g, l'hydrophobant et du NORAMIUM DA 50 utilisé dans un pourcentage de 5,4 % en poids par rapport à $SiO_2$. L'agitation est à turbine. Le produit obtenu est séché en étuve 24 h à 120° C.

On prépare un deuxième granulé (2) de la même manière que dans l'exemple 7. Toutefois l'hydrophobant est le dioléate de diamine CEMULCAT utilisé dans un pourcentage de 6 % en poids par rapport à $SiO_2$.

Le produit obtenu est densifié dans une turbosphère puis séché 24 h à 120° C.

Le produit (3) est un produit du type décrit dans le brevet européen 18866. Il présente une surface BET de 175 m2/g.

Les produits ci-dessus sont utilisés dans un mélange présentant la formulation ci-dessous.

| | Parties en poids |
|---|---|
| Caoutchouc SBR 1509 | 100,00 |
| Silice | 50,00 |
| Polyéthylène glycol PM = 4000 | 3,00 |
| Acide stearique | 3,00 |
| Oxyde de zinc | 3,00 |
| Accélérateur disulfure de benzothiazyle VULCAFOR MBTS | 0,75 |
| Accélérateur diorthotolyl-guanidine VULCAFOR | 1,50 |
| Antioxygène (PERMANAX OD) | 2,00 |
| Soufre | 2,25 |

On apprécie ensuite les propriétés rhéologiques suivantes :

1 - Propriétés mécaniques
Rhéomètre MONSANTO (ASTM D 2084)

Mesure les propriétés rhéologiques du mélange durant la vulcanisation.
CM = Couple Maximal après réticulation complète,
Cm = Couple minimal : Consistance du mélange non vulcanisé ("mélange cru") à la température de l'essai
C ( Couples) : En relation avec le taux de réticulation.

2 - Propriétés statiques
Elles sont mesurées selon les normes :

a) ASTM D 2240-75
Dureté Shore A
b) ASTM D 1054-55
Rebond

3 - Propriétés dynamiques
ASTM D 623-67

Flexomètre Goodrich.

Cet appareil permet de soumettre un vulcanisat à des déformations alternées et de déterminer sa tenue à la fatigue et l'échauffement interne.

a) $\Delta T_c$ : Δ entre la température au coeur de l'éprouvette et la température de chambre (échauffement interne).
b) Conditions des essais :
. charge 106 N, déflexion 22,2 %, fréquence 21,4 Hz
. température de la chambre = 50° C.
Les résultats sont résumés au Tableau 5 .

## TABLEAU 5

| | Produit / Propriétés | 1 | 2 | 3 |
|---|---|---|---|---|
| | Densité Apparente du Produit | 0,21 | 0,37 | 0,25 |
| Propriétés en mélange Caoutchouc | Δ Couples | 64 | 64 | 68 |
| | Dureté Shore A | 68 | 69 | 69 |
| | Rebond % | 25 | 29 | 25 |
| | Echauffement Δ Tc °C | 112 | 100 | 110 |

Ces résultats montrent que les granulés de l'invention présentent par rapport au produit (3) de l'art antérieur et en ce qui concerne l'application en caoutchouc des propriétés tout à fait comparables. Il n'y a pas de différence significative en ce qui concerne la réticulation.
Les duretés Shore sont identiques, le rebond et l'échauffement sont pratiquement identiques en ce qui concerne les granulés non densifiés, ils sont améliorés pour les produits densifiés.

**Revendications**

1. Granulé à base de silice caractérisé en ce qu'il se présente sous forme de bille sensiblement sphérique de taille moyenne comprise entre 80 µm et 400 µm et de densité comprise entre 0,32 et 0,5.

2. Granulé à base de silice, caractérisé en ce qu'il se présente sous forme de bille sensiblement sphérique, de taille moyenne comprise entre 0,4 mm et 20 mm et de densité comprise entre 0,32 et 0,5.

3. Granulé selon la revendication 2, caractérisé en ce que la taille moyenne est comprise entre 0,5 et 20 mm.

4. Granulé selon l'une quelconque des revendications 1 à 3 caractérisé en ce qu'il est constitué d'une silice présentant une surface BET d'au moins 50 $m^2/g$, plus particulièrement comprise entre 50 et 350 $m^2/g$, une surface CTAB d'au moins 40 $m^2/g$, plus particulièrement comprise entre 40 et 320 $m^2/g$.

**5.** Granulé selon l'une quelconque des revendications 1 à 4 caractérisé en ce qu'il présente un volume poreux total d'au plus 1,40 $cm^3/g$ et plus particulièrement compris entre 0,7 $cm^3/g$ et 1,40 $cm^3/g$.

**6.** Granulé selon la revendication 5 caractérisé en ce que au moins 80 % environ du volume poreux total est constitué par des pores présentant un diamètre au plus sensiblement égal à la valeur donnée ci-dessous en fonction de la surface BET.

50 - 100 $m^2/g$ : 0,12 µm
100 - 150 $m^2/g$ : 0,075 µm
150 - 200 $m^2/g$ : 0,050 µm
200 - 250 $m^2/g$ : 0,025 µm
> - 250 $m^2/g$ : 0,015 µm

**7.** Granulé selon l'une quelconque des revendications précédentes caractérisé en ce qu'il est à base de silice précipitée.

**8.** Granulé selon l'une quelconque des revendications précédentes caractérisé en ce qu'il contient environ entre 0,5 et 35 % en poids d'hydrophobant.

**9.** Procédé de préparation de granulés à base de silice, caractérisé en ce qu'il comporte les étapes suivantes :
- on met en présence et on mélange sous agitation une suspension aqueuse de silice, au moins un hydrophobant de type cationique ou amphotère et au moins un solvant organique peu ou non miscible à l'eau, ce par quoi on obtient une phase aqueuse substantiellement exempte de silice et des granulés à base de silice ;
- on sépare la phase aqueuse des granulés,
- éventuellement on lave et on sèche lesdits granulés.

**10.** Procédé de préparation de granulés à base de silice selon l'une quelconque des revendications 1 à 8 caractérisé en ce qu'il comporte les étapes suivantes :
- on met en présence et on mélange sous agitation une suspension aqueuse de silice, au moins un hydrophobant de type cationique ou amphotère et au moins un solvant organique peu ou non miscible à l'eau ce par quoi on obtient une phase aqueuse substantiellement exempte de silice et des granulés à base de silice ;
- on sépare la phase aqueuse des granulés ;
- on lave éventuellement lesdits granulés ;
- on soumet des granulés à un traitement de densification.

**11.** Procédé selon la revendication 10, caractérisé en ce qu'on effectue la densification en soumettant les granulés à une agitation.

**12.** Procédé selon la revendication 10 ou 11, caractérisé en ce qu'on effectue la densification en faisant passer les granulés dans un tambour tournant, dans un drageoir, dans un récipient muni d'un agitateur ou dans un lit fluide.

**13.** Procédé selon l'une quelconque des revendications 9 à 12 caractérisé en ce qu'on utilise au moins un hydrophobant choisi dans le groupe comprenant les amines primaires, secondaires, tertiaires ou leurs sels, les sels d'ammoniums quaternaires, les aminoacides ou leurs sels.

**14.** Procédé selon la revendication 13 caractérisé en ce qu'on utilise des amines grasses.

**15.** Procédé selon la revendication 13 ou 14, caractérisé en ce qu'on utilise les acétates comme sels d'amines primaires, secondaires ou tertiaires.

**16.** Procédé selon l'une quelconque des revendications 9 à 12 caractérisé en ce qu'on utilise une diamine à titre d'hydrophobant.

**17.** Procédé selon la revendication 16, caractérisé en ce qu'on utilise une diamine de formule RNH - $(CH_2)_3$ - $NH_2$, R étant un radical en $C_8$-$C_{22}$.

**18.** Procédé selon la revendication 13 caractérisé en ce qu'on utilise un sel d'ammonium quaternaire de formule (1)

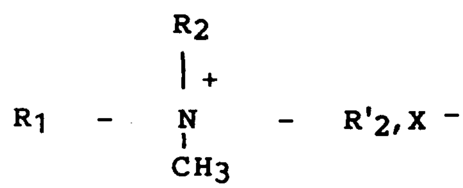

$R_1$ étant un radical alkyle ou alcényle avec de préférence un nombre d'atomes de carbone égal ou supérieur à 6,
$R_2$ et $R'_2$ étant des radicaux alkyle, alkyle-oxy ou alkyl-phényle identiques ou différents, X étant un anion.

**19.** Procédé selon la revendication 13 caractérisé en ce qu'on utilise des diammoniums quaternaires de formule (2) :

$R_3\ R_4\ R_5\ N^+ - (CH_2)\ n - N^+R_6\ R_7\ R_8, 2X^-$

$R_3$ étant un radical alkyle ou alcényle avec un nombre d'atomes de carbone égal ou supérieur à 8 ;
$R_4$ $R_5$ $R_6$ $R_7$ et $R_8$ étant l'hydrogène ou des radicaux alkyles,
$R_4$ $R_5$ $R_6$ ou $R_7$ pouvant être identiques ou différents ;
n étant un nombre compris entre 1 et 3.
X étant un anion.

**20.** Procédé selon la revendication 16 caractérisé en ce qu'on utilise les sels de diamines de formule (3) :

$$[R_3\ R_4\ R_5\ N-(CH_2)_n - NR_6\ R_7R_9]^{2+}\ (R_{10}\ COO)_2^{2-}$$

$R_3$, $R_4$, $R_5$, $R_6$, $R_7$ et n étant tels que précédemment définis, $R_9$ étant l'hydrogène ou un radical alkyle, $R_{10}$ étant un radical alkyle, avec un nombre d'atomes de carbone égal ou supérieur à 8.

**21.** Procédé selon la revendication 13 caractérisé en ce qu'on utilise les amino-acides ou leurs sels de formule (4) ou (5) :

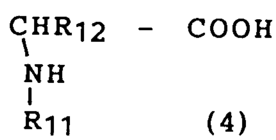

(4)

ou

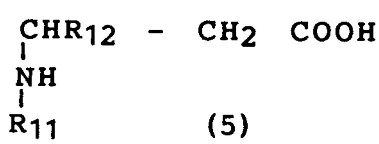

(5)

$R_{11}$, $R_{12}$ étant l'hydrogène ou un radical alkyl, $R_{11}$ et $R_{12}$ n'étant pas simultanément l'hydrogène.

**22.** Procédé selon l'une quelconque des revendications 9 à 13 caractérisé en ce qu'on utilise comme hydrophobant des composés de formule (6) :

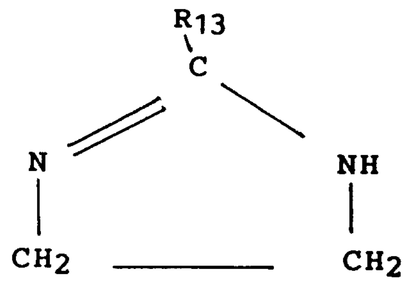

dans laquelle $R_{13}$ est un radical alkyl en $C_8$ - $C_{22'}$
ou des sels des dérivés de formules (7) :

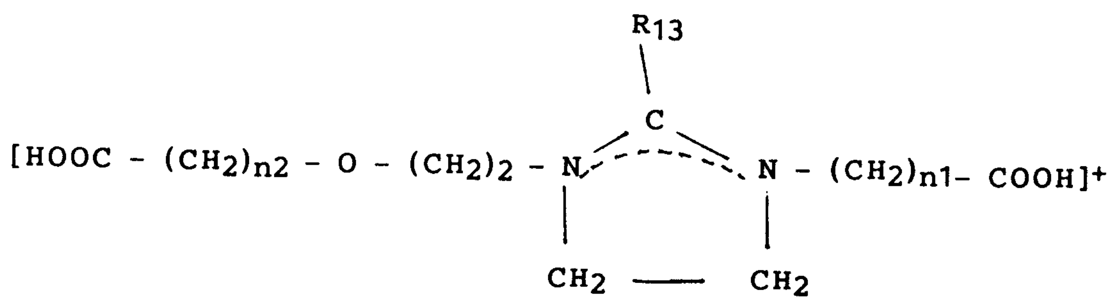

dans laquelle $n_1$ et $n_2$ sont des nombres entiers identiques ou différents pouvant être compris entre 1 et 4.

**23.** Procédé selon l'une quelconque des revendications 9 à 13 caractérisé en ce qu'on utilise comme hydrophobant des composés de formule (8) :

$R_{14}$ - $C_5H_4$ - $NR^{+}15$, $X^{-}$

X étant un halogène, notamment le chlore, $R_{14}$ étant un radical correspondant à la chaîne carbonée d'un acide gras, $R_{15}$ étant un radical alkyle.

**24.** Procédé selon l'une quelconque des revendications 9 à 13 caractérisé en ce qu'on utilise au moins un hydrophobant choisi dans le groupe des amines à nombres d'atomes de carbone au plus égal à 6.

**25.** Procédé selon la revendication 24 caractérisé en ce qu'on utilise une amine aliphatique.

**26.** Procédé selon l'une quelconque des revendications 9 à 25, caractérisé en ce qu'on utilise un solvant choisi dans le groupe comprenant les esters, les éthers, et les cétones.

**27.** Procédé selon la revendication 26 caractérisé en ce qu'on utilise comme solvant un ester acétique.

**28.** Procédé selon l'une quelconque des revendications 9 à 26 caractérisé en ce qu'on utilise un solvant choisi dans le groupe des hydrocarbures benzéniques.

**29.** Procédé selon la revendication 28 caractérisé en ce qu'on utilise comme solvant le toluène ou le xylène.

**30.** Procédé selon l'une quelconque des revendications 9 à 23 caractérisé en ce que l'on utilise un solvant dans le groupe des carbures aliphatiques halogènés ou des hydrocarbures alicycliques halogènés.

**31.** Procédé selon la revendication 30, caractérisé en ce qu'on utilise au moins un solvant choisi dans les carbures éthyléniques halogènés.

**32.** Procédé selon la revendication 30 ou 31 caractérisé en ce que les carbures aliphatiques et les hydrocarbures alicycliques précités sont en $C_1$-$C_4$.

**33.** Procédé selon la revendication 31 caractérisé en ce qu'on utilise au moins un solvant choisi parmi le dichloréthylène, le trichloréthylène et le tétrachloréthylène.

**34.** Procédé selon l'une quelconque des revendications 9 à 23 et 26 à 33 caractérisé en ce qu'on utilise une quantité d'hydrophobant variant entre 1 % et 60 % en poids par rapport à la silice, exprimée en matière sèche.

**35.** Procédé selon l'une quelconque des revendications 24 ou 25 caractérisé en ce qu'on utilise une quantité d'hydrophobant d'au moins 60 % mesurée en poids par rapport à la silice exprimée en matière sèche.

**36.** Procédé selon l'une des revendications 24, 25 ou 35 caractérisé en ce qu'on utilise une amine à nombre d'atomes de carbone au plus égal à 4 et en ce que la mise en contact et le mélange de l'amine, du solvant et de la suspension de silice se fait à une température d'au moins 50°C, plus particulièrement 80°C.

**37.** Procédé selon l'une des revendications 24, 25 ou 35 caractérisé en ce que l'on utilise une amine à nombre d'atomes de carbone de 5 ou 6 et en ce que la mise en contact et le mélange de l'amine, du solvant et de la suspension de silice se fait à une température d'au moins 60°C, plus particulièrement 80°C.

**38.** Procédé selon l'une quelconque des revendications 9 à 37 caractérisé en ce qu'on utilise une quantité de solvant telle que le rapport volume de solvant exprimé en litre/poids de silice en kilo varie entre 1 et 5, de préférence 1,5 et 4,5.

**39.** Procédé selon l'une quelconque des revendicaitons 9 à 38 caractérisé en ce qu'on mélange dans un premier temps la suspension de silice avec le solvant et en ce qu'on introduit dans un deusième temps l'hydrophobant dans le mélange ainsi obtenu.

**40.** Procédé selon l'une quelconque des revendications 9 à 39 caractérisé en ce qu'on mélange dans un premier temps la suspension de silice avec l'hydrophobant et en ce qu'on introduit dans un deusième temps le solvant dans le mélange ainsi obtenu.

**41.** Procédé selon l'une quelconque des revendications 9 à 40, caractérisé en ce qu'après séparation de la phase liquide on lave les granulés avec de l'eau ou de l'eau saturée en solvant précité.

**42.** Procédé selon l'une quelconque des revendications 9 à 41 caractérisé en ce qu'on mélange dans un premier temps le solvant et l'hydrophobant et en ce que dans un deusième temps on met en présence le mélange ainsi obtenu avec la suspension de silice.

**43.** Procédé pour le renforcement des élastomères caractérisé en ce qu'on utilise comme charge renforçante les granulés selon l'une quelconque des revendications 1 à 8.

**Claims**

**1.** Silica-based granular material characterised in that it is in the form of substantially spherical ball with a mean size of between 80 µm and 400 µm and of a relative density of between 0.32 and 0.5.

**2.** Silica-based granular material characterised in that it is in the form of substantially spherical ball with a mean size of between 0.4 mm and 20 mm and of a relative density of between 0.32 and 0.5.

**3.** Granular material according to claim 2 characterised in that the mean size is between 0.5 and 20 mm.

**4.** Granular material according to any one of claims 1 to 3 characterised in that it is formed by a silica having a BET surface area of at least 50 $m^2/g$, more particularly between 50 and 350 $m^2/g$, and a CTAB

surface area of at least 40 $m^2/g$, more particularly between 40 and 320 $m^2/g$.

**5.** Granular material according to any one of claims 1 to 4 characterised in that it has a total porous volume of at most 1.40 $cm^3/g$ and more particularly between 0.7 $cm^3/g$ and 1.40 $cm^3/g$.

**6.** Granular material according to claim 5 characterised in that at least 80% approximately of the total porous volume is formed by pores which are of a diameter at most substantially equal to the value set out below in dependence on the BET specific surface area:

50 - 100 $m^2/g$ : 0.12 µm
100 - 150 $m^2/g$ : 0.075 µm
150 - 200 $m^2/g$ : 0.050 µm
200 - 250 $m^2/g$ : 0.025 µm
> - 250 $m^2/g$ : 0.015 µm.

**7.** Granular material according to any one of the preceding claims characterised in that it is based on precipitated silica.

**8.** Granular material according to any one of the preceding claims characterised in that it contains about between 0.5 and 35% by weight of hydrophobing agent.

**9.** Process for the preparation of silica-based granular materials characterised in that it comprises the following steps:

- bringing together and mixing with agitation an aqueous suspension of silica, at least one hydrophobing agent of cationic or amphoteric type and at least one organic solvent which is weakly miscible or immiscible with water, thereby producing an aqueous phase substantially free from silica and silica-based granular materials;
- separating the aqueous phase from the granular materials, and
- optionally washing and drying said granular materials.

**10.** Process for the preparation of silica-based granular materials according to any one of claims 1 to 8 characterised in that it comprises the following steps:

- bringing together and mixing with agitation an aqueous suspension of silica, at least one hydrophobing agent of cationic or amphoteric type and at least one organic solvent which is weakly miscible or immiscible with water, thereby producing an aqueous phase substantially free from silica and silica-based granular materials;
- separating the aqueous phase from the granular materials;
- optionally washing said granular materials, and
- subjecting granular materials to a densification treatment.

**11.** A process according to claim 10 characterised in that the densification operation is effected by subjecting the granular materials to agitation.

**12.** A process according to claim 10 or claim 11 characterised in that the densification operation is effected by passing the granular materials through a rotating drum, an agitator disc, a container provided with an agitator, or a fluid bed.

**13.** A process according to any one of claims 9 to 12 characterised by using at least one hydrophobing agent selected from the group comprising primary, secondary or tertiary amines or salts thereof, quaternary ammonium salts, amino acids or salts thereof.

**14.** A process according to claim 13 characterised by using fatty amines.

**15.** A process according to claim 13 or claim 14 characterised by using acetates as the salts of primary, secondary or tertiary amines.

**16.** A process according to any one of claims 9 to 12 characterised by using a diamine as the hydrophobing agent.

**17.** A process according to claim 16 characterised by using a diamine of the formula RNH - $(CH_2)_3$ - $NH_2$, R being a $C_8$-$C_{22}$ radical.

**18.** A process according to claim 13 characterised by using a quaternary ammonium salt of the following formula (1):

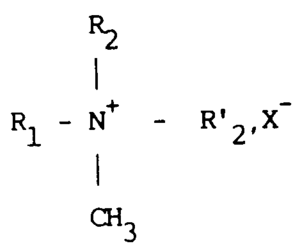

$R_1$ being an alkyl or alkenyl radical with preferably a number of carbon atoms equal to or higher than 6,

$R_2$ and $R'_2$ being alkyl, alkyl-oxy or alkyl-phenyl radicals which are identical or different, X being an anion.

**19.** A process according to claim 13 characterised by using quaternary diammoniums of the following formula (2):

$R_3\ R_4\ R_5\ N^+ - (CH_2)_n - N^+R_6\ R_7\ R_8, 2X^-$

$R_3$ being an alkyl or alkenyl radical with a number of carbon atoms equal to or higher than 8;

$R_4$, $R_5$, $R_6$, $R_7$ and $R_8$ being hydrogen or alkyl radicals,

wherein $R_4$, $R_5$, $R_6$ or $R_7$ may be identical or different,

n being a number between 1 and 3, and

X being an anion.

**20.** A process according to claim 16 characterised by using salts of diamines of the following formula (3):

$[R_3\ R_4\ R_5\ N\text{-}(CH_2)_n - NR_6\ R_7\ R_9]^{2+}\ (R_{10}\ COO)_2^{2-}$

$R_3$, $R_4$, $R_5$, $R_6$, $R_7$ and n being as defined above, $R_9$ being hydrogen or an alkyl radical, and $R_{10}$ being an alkyl radical, with a number of carbon atoms equal to or higher than 8.

**21.** A process according to claim 13 characterised by using amino acids or salts thereof of the following formula (4) or (5):

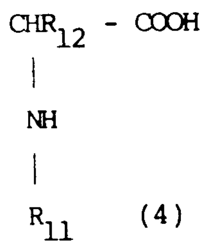 (4) or 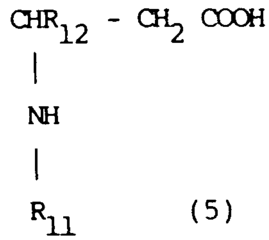 (5)

$R_{11}$ and $R_{12}$ being hydrogen or an alkyl radical and $R_{11}$ and $R_{12}$ not being hydrogen simultaneously.

**22.** A process according to any one of claims 9 to 13 characterised by using as hydrophobing agent compounds of the following formula (6):

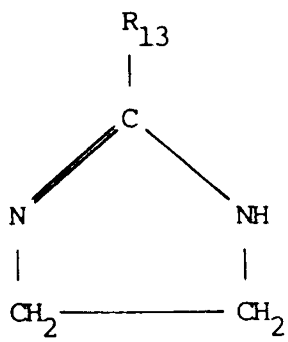

wherein $R_{13}$ is a $C_8$-$C_{22}$ alkyl radical

or salts of the derivatives of the following formulae (7):

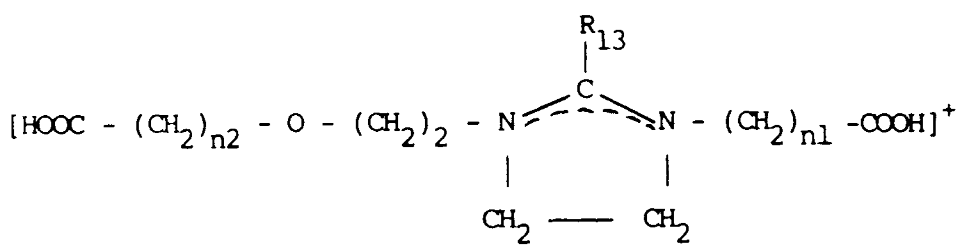

wherein $n_1$ and $n_2$ are identical or different integers which can be between 1 and 4.

**23.** A process according to any one of claims 9 to 13 characterised by using as hydrophobing agent compounds of the following formula (8):

$R_{14}$ - $C_5H_4$ - $NR^{+}15$, $X^{-}$

X being a halogen, in particular chlorine, $R_{14}$ being a radical corresponding to the carbon chain of a fatty acid and $R_{15}$ being an alkyl radical.

**24.** A process according to any one of claims 9 to 13 characterised by using at least one hydrophobing agent selected from the group of amines having a number of carbon atoms at most equal to 6.

**25.** A process according to claim 24 characterised by using an aliphatic amine.

**26.** A process according to any one of claims 9 to 25 characterised by using a solvent selected from the

group comprising esters, ethers and ketones.

**27.** A process according to claim 26 characterised by using an acetic ester as the solvent.

**28.** A process according to any one of claims 9 to 26 characterised by using a solvent selected from the group consisting of benzene hydrocarbons.

**29.** A process according to claim 28 characterised by using toluene or xylene as the solvent.

**30.** A process according to any one of claims 9 to 23 characterised by using a solvent from the group consisting of halogenated aliphatic carbides or halogenated alicyclic hydrocarbons.

**31.** A process according to claim 30 characterised by using at least one solvent selected from halogenated ethylenic carbides.

**32.** A process according to claim 30 or claim 31 characterised in that said aliphatic carbides and alicyclic hydrocarbons are $C_1$-$C_4$.

**33.** A process according to claim 31 characterised by using at least one solvent selected from dichloroethylene, trichloroethylene and tetrachloroethylene.

**34.** A process according to any one of claims 9 to 23 and 26 to 33 characterised by using an amount of hydrophobing agent varying between 1% and 60% by weight with respect to the silica expressed in terms of dry matter.

**35.** A process according to one of claims 24 and 25 characterised by using an amount of hydrophobing agent of at least 60% by weight with respect to the silica expressed in terms of dry matter.

**36.** A process according to one of claims 24, 25 and 35 characterised by using an amine with a number of carbon atoms at most equal to 4 and characterised in that the steps of bringing into contact and mixing the amine, the solvent and the silica suspension are effected at a temperature of at least 50°C and more particularly 80°C.

**37.** A process according to one of claims 24, 25 and 35 characterised by using an amine with a number of carbon atoms of 5 or 6 and characterised in that the operations of bringing into contact and mixing the amine, the solvent and the silica suspension are effected at a temperature of at least 60°C and more particularly 80°C.

**38.** A process according to any one of claims 9 to 37 characterised by using an amount of solvent such that the ratio of the volume of solvent expressed in litres/weight of silica in kilograms varies between 1 and 5, preferably 1.5 and 4.5.

**39.** A process according to any one of claims 9 to 38 characterised by mixing the suspension of silica with the solvent in a first phase and introducing the hydrophobing agent into the resulting mixture in a second phase.

**40.** A process according to any one of claims 9 to 39 characterised by mixing the suspension of silica with the hydrophobing agent in a first phase and introducing the solvent into the resulting mixture in a second phase.

**41.** A process according to any one of claims 9 to 40 characterised in that after separation of the liquid phase, the granular materials are washed with water or with water saturated with said solvent.

**42.** A process according to any one of claims 9 to 41 characterised by mixing the solvent and the hydrophobing agent in a first phase and bringing the resulting mixture together with the silica suspension in a second phase.

**43.** A process for reinforcing elastomers characterised by using as a reinforcing filler the granular materials

according to any one of claims 1 to 8.

**Patentansprüche**

1. Granulat auf der Basis von Siliciumdioxid, dadurch gekennzeichnet, daß es annähernd kugelförmige Körper einer mittleren Größe zwischen 80 und 400 μm und einer Dichte zwischen 0,32 und 0,5 aufweist.

2. Granulat auf der Basis von Siliciumdioxid, dadurch gekennzeichnet, daß es annähernd kugelförmige Körper einer mittleren Größe zwischen 0,4 und 20 mm und einer Dichte zwischen 0,32 und 0,5 aufweist.

3. Granulat nach Anspruch 2, dadurch gekennzeichnet, daß die mittlere Größe zwischen 0,5 und 20 mm liegt.

4. Granulat nach einem der Ansprüche 1 bis 3, dadurch gekennzeichnet, daß es aus Siliciumdioxid besteht, das eine BET-Oberfläche von mindestens 50 $m^2/g$, vorzugsweise zwischen 50 und 350 $m^2/g$ und eine CTAB-Oberfläche von wenigstens 40 $m^2/g$, vorzugsweise zwischen 40 und 320 $m^2/g$ aufweist.

5. Granulat nach einem der Ansprüche 1 bis 4, dadurch gekennzeichnet, daß es ein Gesamtporenvolumen von höchstens 1,40 $cm^3/g$ und vorzugsweise zwischen 0,7 und 1,40 $cm^3/g$ aufweist.

6. Granulat nach Anspruch 5, dadurch gekennzeichnet, daß ungefähr mindestens 80 % des Gesamtporenvolumens aus Poren besteht, die einen Durchmesser aufweisen, der etwa dem nachstehend gegebenen Wert in Abhängigkeit von der BET-Oberfläche entspricht.

| | | |
|---|---|---|
| 50 - 100 $m^2/g$ | : | 0,12 μm |
| 100 - 150 $m^2/g$ | : | 0,075 μm |
| 150 - 200 $m^2/g$ | : | 0,050 μm |
| 200 - 250 $m^2/g$ | : | 0,025 μm |
| > - 250 $m^2/g$ | : | 0,015 μm |

7. Granulat nach einem der vorhergehenden Ansprüche, dadurch gekennzeichnet, daß es auf der Basis von gefälltem Siliciumdioxid beruht.

8. Granulat nach einem der vorhergehenden Ansprüche, dadurch gekennzeichnet, daß es ungefähr zwischen 0,5 und 35 Gew.% eines Hydrophobierungsmittels enthält.

9. Verfahren zur Herstellung von Granulaten auf der Basis von Siliciumdioxid, dadurch gekennzeichnet, daß es folgende Schritte umfaßt:
   - Zusammenführen und Mischen unter Rühren einer wässrigen Siliciumdioxidsuspension mit mindestens einem Hydrophobierungsmittel vom kationischen oder amphoteren Typ und wenigstens einem mit Wasser kaum oder nicht mischbaren organischen Lösungsmittel, wobei eine wäßrige Phase,
   die im wesentlichen frei von Siliciumdioxid ist und Granulate auf Siliciumdioxidbasis erhalten wird;
   - Trennen der wäßrigen Phase von den Granulaten,
   - gegebenenfalls Waschen und Trocknen der Granulate.

10. Verfahren zur Herstellung von Granulaten auf der Basis von Siliciumdioxid nach einem der Ansprüche 1 bis 8, dadurch gekennzeichnet, daß es folgende Schritte umfaßt:
    - Zusammenführen und Mischen unter Rühren einer wäßrigen Siliciumdioxidsuspension mit mindestens einem Hydrophobierungsmittel vom kationischen oder amphoteren Typ und wenigstens einem mit Wasser kaum oder nicht mischbaren organischen Lösungsmittel, wobei eine wäßrige

Phase,
die im wesentlichen frei von Siciliumdioxid ist und Granulate auf Siliciumdioxidbasis erhalten wird;

- Trennen der wäßrigen Phase von den Granulaten;
- gegebenenfalls Waschen der Granulate;
- Aussetzen der Granulate einer Verdichtungsbehandlung.

**11.** Verfahren nach Anspruch 10, dadurch gekennzeichnet, daß man die Verdichtung durch Schütteln der Granulate durchführt.

**12.** Verfahren nach Anspruch 10 oder 11, dadurch gekennzeichnet, daß man die Verdichtung durch Passieren der Granulate durch eine Drehtrommel, in einer Dragiervorrichtung, in einem mit einem Rührer ausgestatteten Behälter oder in einem Fließbett durchführt.

**13.** Verfahren nach einem der Ansprüche 9 bis 12, dadurch gekennzeichnet, daß man wenigstens ein Hydrophobierungsmittel, ausgewählt aus der primäre, sekundäre und tertiäre. Amine oder ihre Salze, quaternäre Ammoniumsalze, Aminosäuren oder ihre Salze umfassenden Gruppe verwendet.

**14.** Verfahren nach Anspruch 13, dadurch gekennzeichnet, daß man Fettamine verwendet.

**15.** Verfahren nach Anspruch 13 oder 14, dadurch gekennzeichnet, daß man die Acetate als Salze primärer, sekundärer oder tertiärer Amine verwendet.

**16.** Verfahren nach einem der Ansprüche 9 bis 12, dadurch gekennzeichnet, daß man ein Diamin als Hydrophobierungsmittel verwendet.

**17.** Verfahren nach Anspruch 16, dadurch gekennzeichnet, daß man ein Diamin der Formel $RNH-(CH_2)_3-NH_2$ verwendet, in der R ein $C_8$-$C_{22}$-Rest ist.

**18.** Verfahren nach Anspruch 13, dadurch gekennzeichnet, daß man ein quaternäres Ammoniumsalz der Formel (1) verwendet:

$$R_1 - \overset{R_2}{\underset{CH_3}{N^+}} - R'_2, X^-$$

in der $R_1$ ein Alkyl- oder Alkenylrest mit einer Kohlenstoffatomzahl größer oder gleich 6 ist, $R_2$ und $R'_2$ gleiche oder verschiedene Alkyl-, Alkyloxy- oder Alkylphenylreste sind und X ein Anion ist.

**19.** Verfahren nach Anspruch 13, dadurch gekennzeichnet, daß man quaternäre Diammoniumsalze der Formel (2) verwendet:

$$R_3R_4R_5N^+ - (CH_2)_n - N^+R_6\ R_7\ R_8, 2X^-$$

in der $R_3$ ein Alkyl- oder Alkenylrest mit einer Kohlenstoffatomzahl größer oder gleich 8 ist,
$R_4$, $R_5$, $R_6$, $R_7$ und $R_8$ Wasserstoff oder Alkylreste sind,
$R_4$, $R_5$, $R_6$ oder $R_7$ gleich oder verschieden sein können,
n eine Zahl zwischen 1 und 3 und
X ein Anion ist.

**20.** Verfahren nach Anspruch 16, dadurch gekennzeichnet, daß man Diaminsalze der Formel (3) verwendet:

$$\left[R_3\ R_4\ R_5\ N-(CH_2)_n - NR_6\ R_7R_9\right]^{2+} (R_{10}\ COO)_2^{\ 2-}$$

in der $R_3$, $R_4$, $R_5$, $R_6$, $R_7$ und n wie zuvor definiert sind, $R_9$ ein Wasserstoff- oder Alkylrest ist, $R_{10}$ ein Alkylrest mit einer Kohlenstoffatomzahl größer oder gleich 8 ist.

**21.** Verfahren nach Anspruch 13, dadurch gekennzeichnet, daß man Aminosäuren oder ihre Salze der Formel (4) oder (5) verwendet:

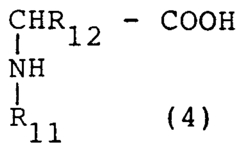 (4) oder 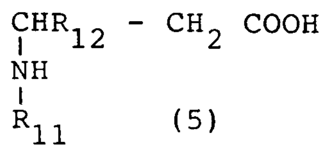 (5)

in der $R_{11}$ und $R_{12}$ ein Wasserstoff- oder Alkylrest ist, wobei $R_{11}$ und $R_{12}$ nicht gleichzeitig Wasserstoff sein können.

**22.** Verfahren nach einem der Ansprüche 9 bis 13, dadurch gekennzeichnet, daß man als Hydrophobierungsmittel Verbindungen der Formel (6) verwendet:

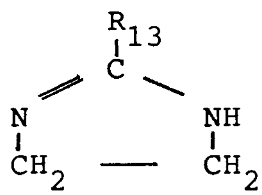

in der $R_{13}$ ein $C_8$-$C_{22}$ -Alkylrest ist oder Salze von Derivaten der Formel (7):

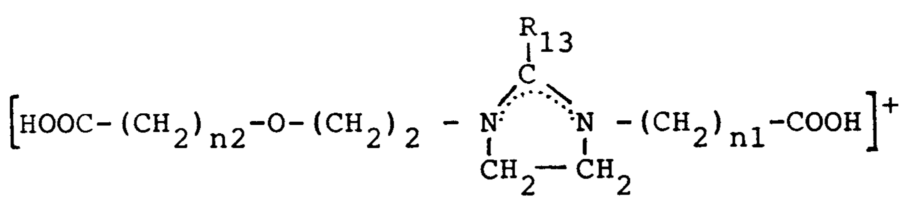

in der $n_1$ und $n_2$ gleiche oder verschiedene ganze Zahlen zwischen 1 und 4 sein können.

**23.** Verfahren nach einem der Ansprüche 9 bis 13, dadurch gekennzeichnet, daß man als Hydrophobierungsmittel Verbindungen der Formel (8) verwendet:

$R_{14}$ - $C_5H_4$ - $NR^+15$, $X^-$

in der X in Halogen, insbesondere Chlor ist, $R_{14}$ ein zur Kohlenstoffkette einer Fettsäure korrespondierender Rest ist, $R_{15}$ ein Alkylrest ist.

**24.** Verfahren nach einem der Ansprüche 9 bis 13, dadurch gekennzeichnet, daß man wenigstens ein Hydrophobierungsmittel, ausgewählt aus der Gruppe der Amine mit einer Kohlenstoffatomzahl von höchstens 6, verwendet.

**25.** Verfahren nach Anspruch 24, dadurch gekennzeichnet, daß man ein aliphatisches Amin verwendet.

**26.** Verfahren nach einem der Ansprüche 9 bis 25, dadurch gekennzeichnet, daß man ein Lösungsmittel, ausgewählt aus der Ester, Ether und Ketone umfassenden Gruppe verwendet.

**27.** Verfahren nach Anspruch 26, dadurch gekennzeichnet, daß man als Lösungsmittel einen Essigsäureester verwendet.

**28.** Verfahren nach einem der Ansprüche 9 bis 26, dadurch gekennzeichnet, daß man ein Lösungsmittel aus der Gruppe der benzolischen Kohlenwasserstoffe verwendet.

**29.** Verfahren nach Anspruch 28, dadurch gekennzeichnet, daß man als Lösungsmittel Toluol oder Xylol verwendet.

**30.** Verfahren nach einem der Ansprüche 9 bis 23, dadurch gekennzeichnet, daß man ein Lösungsmittel aus der Gruppe der halogenierten aliphatischen oder der halogenierten alicyclischen Kohlenwasserstoffverbindungen verwendet.

**31.** Verfahren nach Anspruch 30, dadurch gekennzeichnet, daß man mindestens ein Lösungsmittel ausgewählt aus den halogenierten ethylenischen Kohlenwasserstoffverbindungen verwendet.

**32.** Verfahren nach Anspruch 30 oder 31, dadurch gekennzeichnet, daß die vorgenannten aliphatischen und alicycllschen Kohlenwasserstoffe $C_1$ - $C_4$ -verbindungen sind.

**33.** Verfahren nach Anspruch 31, dadurch gekennzeichnet, daß man mindenstens ein Lösungsmittel, ausgewählt aus Dichlorethylen, Trichlorethylen und Tetrachlorethylen verwendet.

**34.** Verfahren nach einem der Ansprüche 9 bis 23 und 26 bis 33, dadurch gekennzeichnet, daß man eine Menge des Hydrophobierungsmittels verwendet, die zwischen 1 und 60 Gew.%, bezogen auf das Siliciumdioxid und ausgedrückt als Trockenmasse variieren kann.

**35.** Verfahren nach einem der Ansprüche 24 oder 25, dadurch gekennzeichnet, daß man eine Menge des Hydrophobierungsmittels von mindestens 60 Gew.%, bezogen auf das Siliciumdioxid und ausgedrückt als Trockenmasse verwendet.

**36.** Verfahren nach einem der Ansprüche 24, 25 oder 35, dadurch gekennzeichnet, daß man ein Amin mit einer Kohlenstoffatomzahl höchstens gleich 4 verwendet und das in Kontakt bringen und Mischen des Amins, des Lösungsmittels und der Siliciumdioxidsuspension bei einer Temperatur von mindestens 50° C, vorzugsweise bei 80° C, stattfindet.

**37.** Verfahren nach Anspruch 24, 25 oder 35, dadurch gekennzeichnet, daß man ein Amin mit einer Kohlenstoffatomzahl von 5 oder 6 verwendet und das in Kontakt bringen und Mischen des Amins, des Lösungsmittels und der Siliciumdioxidsuspension bei einer Temperatur von mindestens 60° C, vorzugsweise bei 80° C, stattfindet.

**38.** Verfahren nach einem der Ansprüche 9 bis 37, dadurch gekennzeichnet, daß man eine solche Menge des Lösungsmittels verwendet, daß das Volumenverhältnis des Lösungsmittels, ausgedrückt in 1 zum Gewicht des Siliciumdioxids, ausgedrückt in Kg, zwischen 1 und 5, vorzugsweise zwischen 1,5 und 4,5, variiert.

**39.** Verfahren nach einem der Ansprüche 9 bis 38, dadurch gekennzeichnet, daß man zuerst die Siliciumdioxidsuspension mit dem Lösungsmittel mischt und dann das Hydrophobierungsmittel zu dem so erhaltenen Gemisch zufügt.

**40.** Verfahren nach einem der Ansprüche 9 bis 39, dadurch gekennzeichnet, daß man zuerst die Siliciumdioxidsuspension mit dem Hyrophobierungsmittel mischt und dann das Lösungsmittel zu dem so erhaltenen Gemisch zufügt.

**41.** Verfahren nach einem der Ansprüche 9 bis 40, dadurch gekennzeichnet, daß man nach der Abtrennung der flüssigen Phase die Granulate mit Wasser oder mit Wasser, das mit vorgenanntem Lösungsmittel gesättigt ist, wäscht.

**42.** Verfahren nach einem der Ansprüche 9 bis 41, dadurch gekennzeichnet, daß man zuerst das Lösungsmittel und das Hydrophobierungsmittel mischt und dann der so erhaltenen Mischung die

Siliciumdioxidsuspension zufügt.

**43.** Verfahren zur Verstärkung von Elastomeren, dadurch gekennzeichnet, daß man als Verstärkungsmaterial die Granulate nach einem der Ansprüche 1 bis 8 verwendet.